# EUROPEAN PATENT SPECIFICATION

(11) **EP 3 355 039 B1**
(45) Date of publication and mention of the grant of the patent: **26.02.2020**
(21) Application number: 17197780.4
(22) Date of filing: 23.10.2017
(51) Int. Cl.: G01K 7/02, G01K 7/18, G01K 15/00

(54) **TEMPERATURE SENSING UNIT AND TEMPERATURE REGULATOR**
TEMPERATURERFASSUNGSEINHEIT UND TEMPERATURREGLER
UNITÉ DE DÉTECTION DE TEMPÉRATURE ET RÉGULATEUR DE TEMPÉRATURE

(30) Priority: 30.01.2017 JP 2017014177
(43) Date of publication of application: 01.08.2018
(73) Proprietor: Omron Corporation, Kyoto-shi, Kyoto 600-8530 (JP)
(72) Inventor: TAKATANI, Ryohei, Kyoto-shi, Kyoto 600-8530 (JP); SAKAGUCHI, Takashi, Kyoto-shi, Kyoto 600-8530 (JP); KUNIYASU, Yuki, Kyoto-shi, Kyoto 600-8530 (JP); OGAWA, Hironori, Kyoto-shi, Kyoto 600-8530 (JP); OZAKI, Masahiro, Kyoto-shi, Kyoto 600-8530 (JP)
(74) Representative: Becker & Kurig Partnerschaft Patentanwälte PartmbB

(56) References cited:
- CN-U- 203 216 628
- JP-A- H06 318 259
- JP-A- 2004 279 171

## Description

### BACKGROUND OF THE INVENTION

### Field of the Invention

The present invention relates to a technology of allowing at least a resistance temperature detector and a thermocouple to be selectively connected as a temperature sensor, processing a sensing signal of the temperature sensor, and sensing the temperature of a controlled object.

### Description of Related Art

In the related art, there have been temperature regulators having a temperature sensing function which allows a resistance temperature detector and a thermocouple to be selectively connected as a temperature sensor for sensing the temperature of a controlled object (for example, refer to Patent Document 1). A temperature regulator processes a sensing signal, which is an output of the connected temperature sensor (resistance temperature detector, thermocouple, and the like) and acquires the temperature of the controlled object.

An ordinary temperature regulator has three connection terminals for connection to a three-wire type resistance temperature detector. In the temperature regulator, the thermocouple is connected to two connection terminals out of the three connection terminals. That is, the temperature regulator has a configuration in which the resistance temperature detector and the thermocouple are connected while sharing the connection terminals.

In addition, the temperature regulator includes a circuit for processing a sensing signal of the resistance temperature detector connected as a temperature sensor (resistance temperature detector circuit) and a circuit for processing a sensing signal of the thermocouple connected as a temperature sensor (thermocouple circuit). Therefore, a temperature regulator, having a configuration in which a resistance temperature detector and a thermocouple can be selectively connected as a temperature sensor, includes a setting portion which allows a user to set whether a temperature sensor to be connected is the resistance temperature detector or the thermocouple. The temperature regulator performs switching between the resistance temperature detector circuit and the thermocouple circuit in accordance with the type of the temperature sensor set by the setting portion, processes sensed data of the connected temperature sensor, and acquires the temperature of a controlled object.

### [Prior Art Document]

### [Patent Documents]

[Patent Document 1] Japanese Unexamined Patent Application Publication No. 2004-279171

CN 203 216 628 U discloses a temperature measuring device which comprises an analog switch, a multichannel analog switch, a multichannel difference analog switch, a micro control unit, an input channel, a signal processing circuit and a difference input analog to digital converter, wherein the analog switch is used for opening or closing bias voltage provided by the temperature measuring device; the multichannel analog switch is used for converting or closing an excitation current value provided by the temperature measuring device.

### SUMMARY OF THE INVENTION

However, when the type of the connected temperature sensor and the type of the temperature sensor set by a setting portion are different from each other in a temperature regulator having the configuration described above, the connected temperature sensor and a circuit for processing a sensing signal of a temperature sensor are in a mismatch state. For example, this state is the result of a case of erroneous setting in which a user erroneously sets the type of a temperature sensor in the setting portion or a case of erroneous connection in which a temperature sensor of an incorrect type is connected to the temperature regulator by a user. The temperature regulator does not acquire the temperature of a controlled object when the connected temperature sensor and the circuit for processing the sensing signal of the temperature sensor are in a mismatch state.

Particularly, when the temperature regulator performs control of maintaining the temperature of a controlled object at a target temperature (set temperature) in a state in which the temperature of the controlled object is not acquired due to erroneous connection or erroneous setting, it is not possible to properly generate a drive signal for a heat source (heater, cooler, or the like) controlling the temperature of the controlled object. In this case, the temperature regulator performs inappropriate temperature control with respect to the controlled object, and thus the temperature of the controlled object is in a state far from the target temperature.

An object of the present invention is to provide a technology capable of detecting whether or not erroneous setting in which the type of a temperature sensor is erroneously set or erroneous connection in which a temperature sensor of an incorrect type is connected has occurred.

In order to achieve the object described above, a temperature sensing unit of the present invention has the following configuration.

As a temperature sensor for sensing a temperature of a controlled object, at least a resistance temperature detector and a thermocouple can be selectively connected to an input portion. A processing portion performs temperature sensing processing of processing a sensing signal of the temperature sensor connected to the input portion and acquiring the temperature of the controlled object. A temperature sensor type setting portion sets a type of a temperature sensor to be connected to the input portion.

In addition, the input portion has a first connection terminal to which one end of a temperature sensing resistance countermeasure element of the resistance temperature detector is connected, a second connection terminal to which the other end of the temperature sensing resistance countermeasure element of the resistance temperature detector or one end of the thermocouple is selectively connected, and a third connection terminal to which the other end of the thermocouple is connected. When the type of the temperature sensor set by the temperature sensor type setting portion is a thermocouple, the processing portion performs erroneous connection detecting processing of detecting whether or not the temperature sensor connected to the input portion is a thermocouple based on an inter-terminal voltage between the first connection terminal and the second connection terminal by determining that the connection is erroneous if the inter-terminal voltage is equal to or smaller than a threshold voltage set in advance. The threshold voltage is a value which is smaller than the voltage between the first connection terminal and the second connection terminal when the thermocouple is connected to the input portion and is greater than the maximum voltage between the first connection terminal and the second connection terminal when the resistance temperature detector is connected to the input portion. The processing portion performs the erroneous connection detecting processing of detecting whether or not the temperature sensor connected to the input portion is the thermocouple based on the sensed inter-terminal voltage between the first connection terminal and the second connection terminal in a state in which a constant current flows through the first connection terminal and the second connection terminal.

According to the configuration, when the type of the temperature sensor set by the temperature sensor type setting portion is a thermocouple, it is possible to detect whether or not erroneous setting in which the type of a temperature sensor is erroneously set or erroneous connection in which a temperature sensor of an incorrect type is connected has occurred.

The state is the same in the case of erroneous setting in which the type of a temperature sensor is erroneously set to the thermocouple and in the case of erroneous connection in which the resistance temperature detector is erroneously connected. Therefore, it is not possible to detect whether the setting is erroneous setting or erroneous connection.

For example, the processing portion detects whether or not the temperature sensor connected to the input portion is a thermocouple based on a sensed inter-terminal voltage between the first connection terminal and the second connection terminal in a state in which a constant current flows through the first connection terminal and the second connection terminal.

In addition, the processing portion may further perform the erroneous connection detecting processing by applying a reference voltage to the third connection terminal.

In addition, it is preferable that the processing portion performs the erroneous connection detecting processing when activated.

In addition, the temperature sensing unit may further include a display portion which displays a result of detection when the processing portion detects, in the erroneous connection detecting processing, that the temperature sensor connected to the input portion is not a thermocouple.

In addition, in a case of a three-wire type resistance temperature detector, the one end of the temperature sensing resistance countermeasure element is connected to the first connection terminal, and the other end of the temperature sensing resistance countermeasure element is connected to the second connection terminal and the third connection terminal in the input portion.

Moreover, according to the present invention, there is provided a temperature regulator including the temperature sensing unit described above, a drive signal generating portion and an output portion. The drive signal generating portion generates a drive signal for a heat source controlling a temperature of the controlled object in accordance with the temperature of the controlled object sensed by the processing portion in the temperature sensing processing. Then, the output portion outputs a drive signal generated by the drive signal generating portion to the heat source changing the temperature of the controlled object.

According to the configuration, it is possible to restrain the temperature regulator from performing inappropriate temperature control with respect to a controlled object due to erroneous setting of the type of temperature sensor or erroneous connection. Therefore, the temperature of the controlled object can be prevented from being far from a target temperature.

Moreover, it is preferable that the drive signal generating portion be configured to prohibit the output portion from outputting a drive signal to the heat source when the processing portion detects, in the erroneous connection detecting processing, that a sensor connected to the input portion is not a thermocouple.

According to the present invention, it is possible to detect whether or not erroneous setting in which the type of temperature sensor is erroneously set or erroneous connection in which a temperature sensor of an incorrect type is connected has occurred.

### BRIEF DESCRIPTION OF THE DRAWINGS

FIG. 1 is a block diagram illustrating a configuration of a main portion of a temperature regulator.
FIG. 2 is a schematic view illustrating a configuration of an input portion.
FIG. 3 is a view illustrating a state in which a resistance temperature detector is connected to the input portion.
FIG. 4 is a view illustrating a state in which a thermocouple is connected to the input portion.
FIG. 5 is a flowchart illustrating an operation of the temperature regulator.
FIG. 6 is a flowchart illustrating erroneous connection detecting processing.
FIG. 7 is a view illustrating a state in which the thermocouple is connected in the erroneous connection detecting processing.
FIG. 8 is a schematic view illustrating a configuration of an input portion according to another example.

### DESCRIPTION OF THE EMBODIMENT

Hereinafter, a temperature regulator will be described as an embodiment of the present invention.

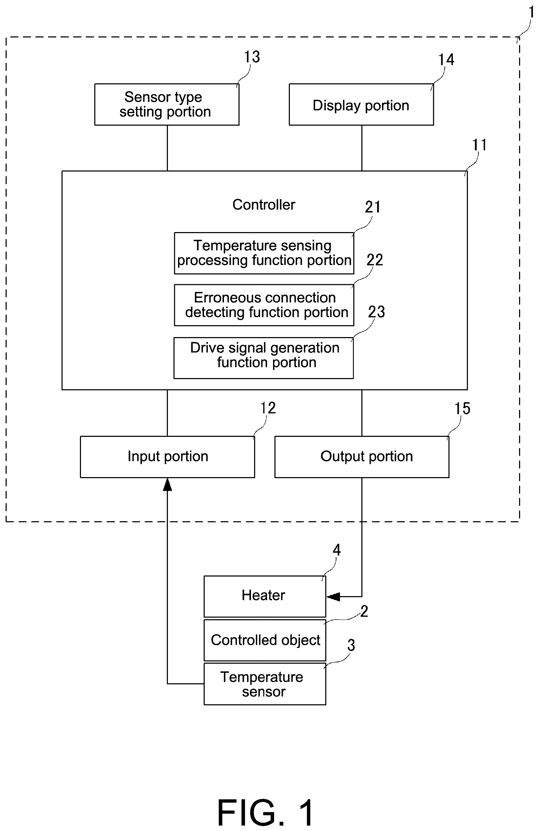

FIG. 1 is a block diagram illustrating a configuration of a main portion of a temperature regulator according to the present example. A temperature regulator 1 according to the present example includes a temperature sensing unit according to the present invention. This temperature regulator 1 executes control of maintaining the temperature of a controlled object 2 at a target temperature (set temperature). A temperature sensor 3 and a heater 4 are connected to the temperature regulator 1. The temperature sensor 3 is a sensor that measures the temperature of the controlled object2 (senses the temperature of the controlled object 2). In the present example, the temperature sensor 3 connected to the temperature regulator 1 is a resistance temperature detector 3A or a thermocouple 3B as described below.

The temperature regulator 1 processes a sensing signal of the temperature sensor 3 and acquires the temperature of the controlled object 2. In addition, the temperature regulator 1 controls the heater 4 which warms the controlled object 2 such that the temperature of the controlled object 2 reaches the target temperature. For example, the controlled object 2 is a seal bar used in packaging machines. The heater 4 corresponds to a heat source in the present invention.

In the present example, the target temperature of the controlled object 2 is a temperature higher than the ambient temperature. When the target temperature of the controlled object 2 is a temperature lower than the ambient temperature, a capacitor (cooler) may be used as a heat source instead of the heater 4.

The temperature regulator 1 includes a controller 11, an input portion 12, a sensor type setting portion 13, a display portion 14, and an output portion 15.

The controller 11 controls an operation of each portion in a main body of the temperature regulator 1. In addition, the controller 11 has a temperature sensing processing function portion 21, an erroneous connection detecting function portion 22, and a drive signal generation function portion 23. The temperature sensing processing function portion 21, the erroneous connection detecting function portion 22, and the drive signal generation function portion 23 will be described below in detail.

A sensing signal of the connected temperature sensor 3 is input to the input portion 12. The temperature sensor 3 inputs a sensing signal obtained by measuring (sensing) the temperature of the controlled object 2 to the input portion 12. The input portion 12 includes a circuit (circuit for resistance temperature detector) for processing a sensing signal of the resistance temperature detector 3A connected as the temperature sensor 3, and a circuit (circuit for thermocouple) for processing a sensing signal of the thermocouple connected as a temperature sensor. In addition, the input portion 12 has a configuration for switching between the circuit for resistance temperature detector and the circuit for thermocouple.

The sensor type setting portion 13 sets the type of the temperature sensor 3. In the present example, the type of the temperature sensor 3 set by the sensor type setting portion 13 is either the resistance temperature detector 3A or the thermocouple 3B. The sensor type setting portion 13 corresponds to a temperature sensor type setting portion in the present invention.

The display portion 14 displays the temperature of the controlled object 2 acquired by the controller 11 which has processed a sensing signal of the temperature sensor 3 input to the input portion 12. In addition, the display portion 14 displays the result of determination when the controller 11 determines that the type of the temperature sensor 3 set by the sensor type setting portion 13 and the type of the temperature sensor 3 connected to the input portion 12 are different from each other. For example, a case of erroneous setting in which a user has erroneously set the type of the temperature sensor 3 in the sensor type setting portion 13 or a case of erroneous connection in which a user has connected the temperature sensor 3 of an incorrect type to the input portion 12 results in a state in which the type of the temperature sensor 3 set by the sensor type setting portion 13 and the type of the temperature sensor 3 connected to the input portion 12 are different from each other. Here, a state in which the type of the temperature sensor 3 set by the sensor type setting portion 13 and the type of the temperature sensor 3 connected to the input portion 12 are different from each other will be referred to as an inappropriate state.

The heater 4 warming the controlled object 2 is connected to the output portion 15. The output portion 15 outputs the drive signal, which has been generated by the controller 11 for the heater 4, to the heater 4. The controller 11 generates a drive signal for the heater 4 in accordance with the temperature of the controlled object 2 acquired based on a sensing signal of the temperature sensor 3 input to the input portion 12.

Next, the temperature sensing processing function portion 21, the erroneous connection detecting function portion 22, and the drive signal generation function portion 23 included in the controller 11 will be described.

The temperature sensing processing function portion 21 performs computation of processing a sensing signal of the temperature sensor 3 input to the input portion 12 and acquiring the temperature of the controlled object 2. The computation of acquiring the temperature of the controlled object 2 varies depending on the type of the temperature sensor 3 connected to the input portion 12. The temperature sensing processing function portion 21 switches the computation of acquiring the temperature of the controlled object 2 in accordance with the type of the temperature sensor 3 set by the sensor type setting portion 13. The temperature sensing processing function portion 21 executes temperature sensing processing in the present invention.

The erroneous connection detecting function portion 22 detects whether or not the state is an inappropriate state in which the type of the temperature sensor 3 set by the sensor type setting portion 13 and the type of the temperature sensor 3 actually connected to the input portion 12 are different from each other. Specifically, when the type of the temperature sensor 3 set by the sensor type setting portion 13 is the thermocouple 3B, the erroneous connection detecting function portion 22 performs erroneous connection detecting processing for detecting whether or not the temperature sensor 3 actually connected to the input portion 12 is the thermocouple 3B. The erroneous connection detecting function portion 22 performs this erroneous connection detecting processing when the main body of the temperature regulator 1 is activated. In addition, when the type of the temperature sensor 3 set by the sensor type setting portion 13 is the resistance temperature detector 3A, the erroneous connection detecting function portion 22 also performs the erroneous connection detecting processing for detecting whether or not the temperature sensor 3 actually connected to the input portion 12 is the resistance temperature detector 3A.

The drive signal generation function portion 23 generates a drive signal for the heater 4 in accordance with the temperature of the controlled object 2 acquired by processing a sensing signal of the temperature sensor 3 input to the input portion 12. The drive signal generation function portion 23 generates a drive signal for the heater 4 by performing known PID control or the like.

In the present example, the temperature sensing processing function portion 21 and the erroneous connection detecting function portion 22 correspond to processing portions in the present invention. In addition, the drive signal generation function portion 23 corresponds to a drive signal generating portion in the present invention. The processing portion for the temperature sensing unit of the present invention and the drive signal generating portion for the temperature regulator of the present invention may be configured to employ controllers different from each other.

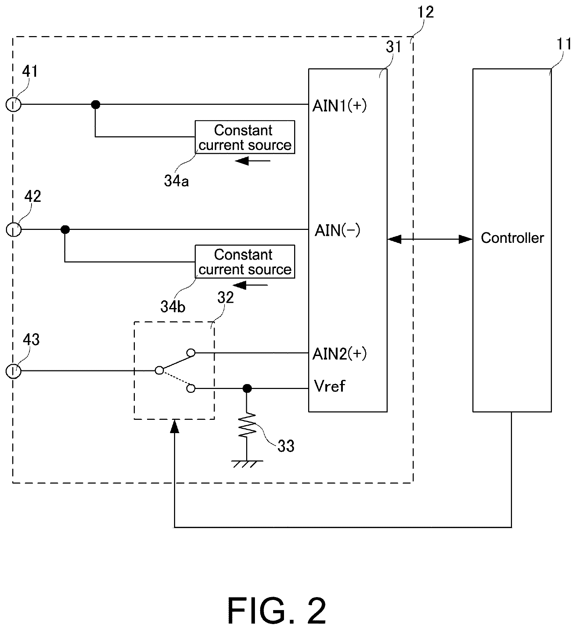

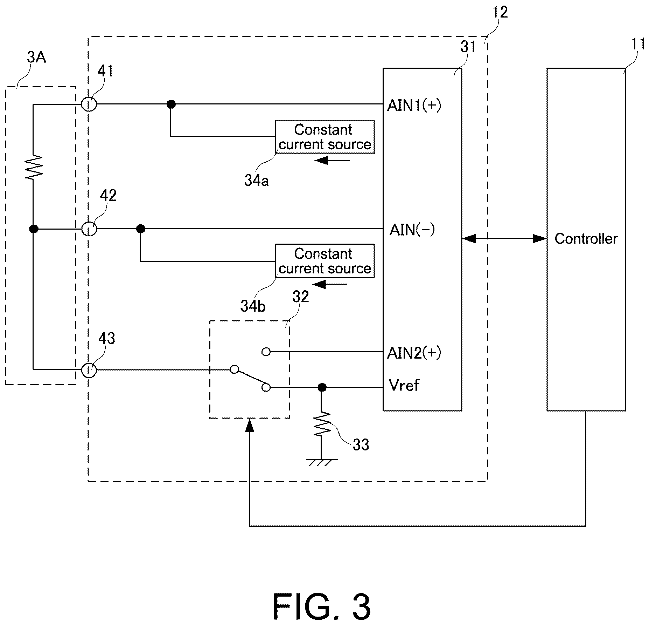

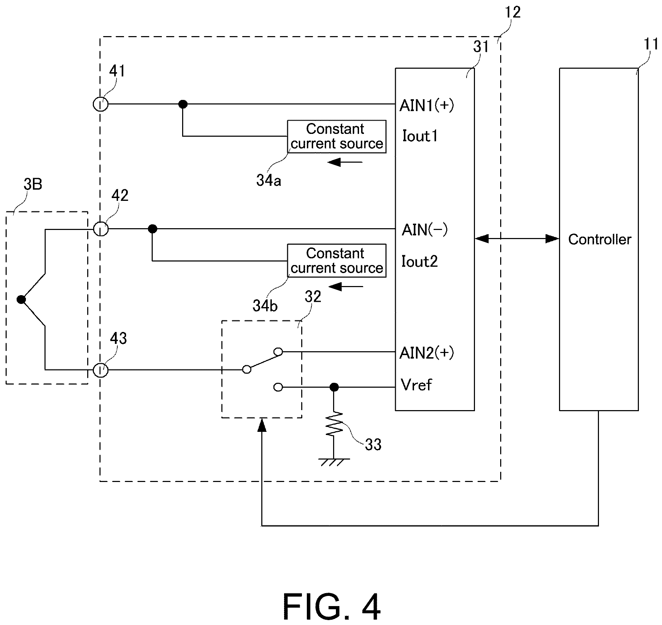

FIG. 2 is a schematic view illustrating a configuration of an input portion. FIG. 3 is a view illustrating a state in which a resistance temperature detector is connected to the input portion. FIG. 4 is a view illustrating a state in which a thermocouple is connected to the input portion. The input portion 12 includes three connection terminals 41, 42, and 43. As illustrated in FIG. 3, in a three-wire type resistance temperature detector 3A, one end of a resistance temperature sensing element is connected to the connection terminal 41 and the other end of the resistance temperature sensing element is connected to the connection terminal 42 and the connection terminal 43.

In a two-wire type resistance temperature detector 3A, one end of the resistance temperature sensing element may be connected to the connection terminal 41 and the other end of the resistance temperature sensing element may be connected to the connection terminal 42. In this case, the connection terminal 42 and the connection terminal 43 may be in an open state or in a short circuit state. In addition, in a four-wire type resistance temperature detector 3A, after one connection wire is subjected to insulation processing, the remaining three connection wires may be respectively connected to the connection terminals 41, 42, and 43 of the temperature regulator, similar to the three-wire type resistance temperature detector 3A illustrated in FIG. 3. In addition, as illustrated in FIG. 4, in the thermocouple 3B, one end is connected to the connection terminal 42 and the other end is connected to the connection terminal 43.

The connection terminal 41 corresponds to a first connection terminal in the present invention, the connection terminal 42 corresponds to a second connection terminal in the present invention, and the connection terminal 43 corresponds to a third connection terminal in the present invention.

In addition, the input portion 12 includes an AD converter 31, a change-over switch 32, a reference resistance 33, and two constant current sources 34a and 34b.

The AD converter 31 selectively performs AD conversion of an input voltage between analog input terminals AIN1(+) and AIN(-) and an input voltage between analog input terminals AIN2(+) and AIN(-). In addition, the AD converter 31 includes a Vref terminal for inputting a reference voltage by means of a power source (not illustrated).

The analog input terminal AIN1(+) of the AD converter 31 is connected to the connection terminal 41. The analog input terminal AIN(-) of the AD converter 31 is connected to the connection terminal 42. An input voltage between the analog input terminals AIN1(+) and AIN(-) is the voltage between the connection terminals 41 and 42.

In addition, the constant current source 34a is connected to the connection terminal 41. The constant current source 34b is connected to the connection terminal 42. The constant current sources 34a and 34b output a constant current I1. The controller 11 performs control of switching between an ON-state in which the constant current I1 is output and an OFF-state in which no constant current I1 is output, for each of the constant current sources 34a and 34b.

The change-over switch 32 performs switching in which the connection terminal 43 is connected to the analog input terminal AIN2(+) of the AD converter 31 or the Vref terminal of the AD converter 31. The controller 11 controls the state of the change-over switch 32. When the connection terminal 43 is connected to the analog input terminal AIN2(+) of the AD converter 31 via the change-over switch 32, the input voltage between the analog input terminals AIN2(+) and AIN(-) is the voltage between the connection terminals 42 and 43. In addition, when the connection terminal 43 is connected to the Vref terminal of the AD converter 31 via the change-over switch 32, its potential becomes the reference voltage due to the reference resistance 33.

When the resistance temperature detector 3A is connected to the input portion 12 as the temperature sensor 3, the controller 11 causes the constant current sources 34a and 34b to be in an ON-state and causes the connection terminal 43 to be connected to the Vref terminal of the AD converter 31 by the change-over switch 32. In addition, when the thermocouple 3B is connected to the input portion 12 as the temperature sensor 3, the controller 11 causes the constant current sources 34a and 34b to be in an OFF-state and causes the connection terminal 43 to be in a state being connected to the terminal of AIN2(+) of the AD converter 31 by the change-over switch 32.

In addition, the AD converter 31 selectively performs AD conversion of an input voltage between the analog input terminals AIN1(+) and AIN(-) or an input voltage between the analog input terminals AIN2(+) and AIN(-) in response to an instruction from the controller 11. A digital output of the AD converter 31 is input to the controller 11.

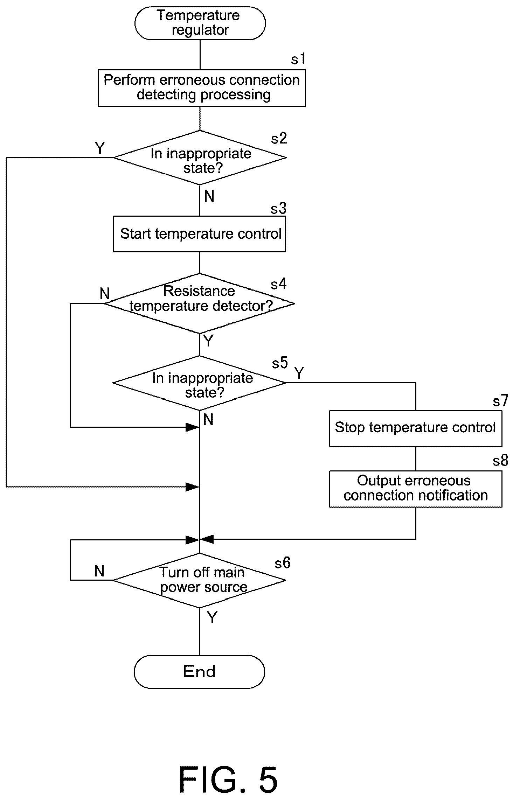

Hereinafter, an operation of the temperature regulator 1 according to the present example will be described. FIG. 5 is a flowchart illustrating an operation of the temperature regulator. The temperature regulator 1 starts the processing illustrated in FIG. 5 when a main power source is turned on and is activated. The temperature regulator 1 performs the erroneous connection detecting processing when the main power source is turned on and is activated (s1). The erroneous connection detecting processing in s1 is processing of detecting whether or not the temperature sensor 3 connected to the input portion 12 is the thermocouple 3B when the type of the temperature sensor 3 set by the sensor type setting portion 13 is the thermocouple 3B.

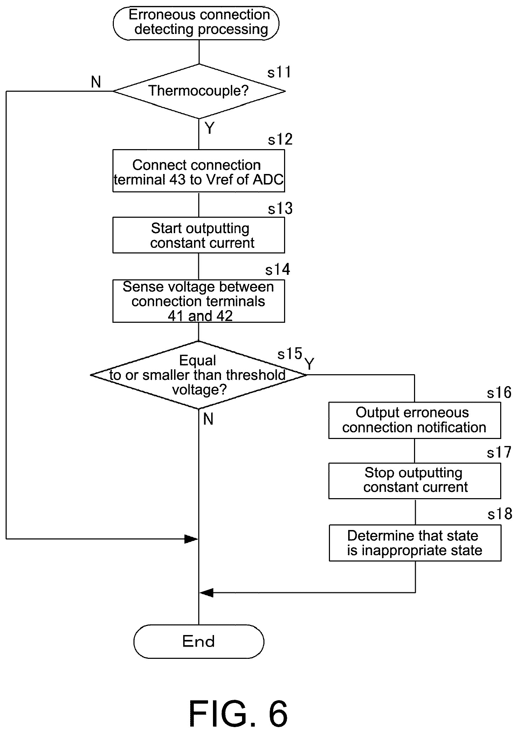

FIG. 6 is a flowchart illustrating the erroneous connection detecting processing in s1. The erroneous connection detecting function portion 22 performs this erroneous connection detecting processing. The erroneous connection detecting function portion 22 determines whether or not the type of the temperature sensor 3 set by the sensor type setting portion 13 is the thermocouple 3B (s11). When the type of the temperature sensor 3 set by the sensor type setting portion 13 is not the thermocouple 3B, the erroneous connection detecting function portion 22 ends this processing without determining that the state is an inappropriate state. In this case, the erroneous connection detecting function portion 22 does not determine that the state is not an inappropriate state.

When the type of the temperature sensor 3 set by the sensor type setting portion 13 is the thermocouple 3B, the erroneous connection detecting function portion 22 controls the change-over switch 32 such that the connection terminal 43 is connected to the Vref terminal of the AD converter 31 (s12). In addition, the erroneous connection detecting function portion 22 causes the state of the two constant current sources 34a and 34b to be in an ON-state outputting the constant current I1 (s13). The order of the processing of s12 and s13 may be reversely performed.

The erroneous connection detecting function portion 22 senses the voltage between the connection terminals 41 and 42 (s14). In s14, the erroneous connection detecting function portion 22 instructs the AD converter 31 to input a digital value, which is obtained by performing AD conversion of an input voltage between the analog input terminals AIN1(+) and AIN(-) (voltage between the connection terminals 41 and 42), to the controller 11.

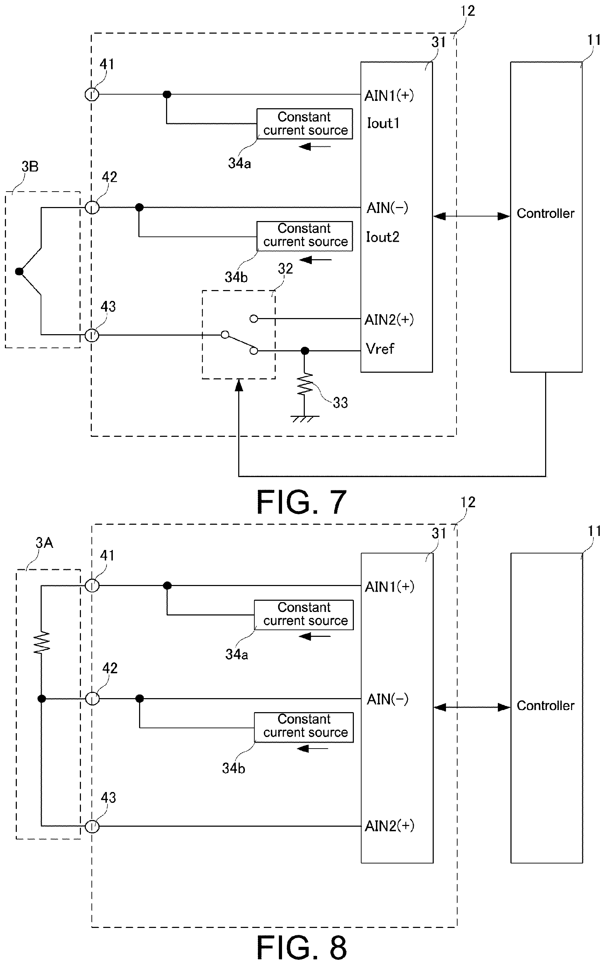

When the temperature sensor 3 connected to the input portion 12 is the thermocouple 3B, the input portion 12 is in the circuit state illustrated in FIG. 7. Since the connection terminal 41 is in an open state as illustrated, no current flows. Therefore, the potential of the connection terminal 41 is a voltage value AVDD of the constant current source 34a. In addition, the constant current I1 output from the constant current source 34b flows through the connection terminal 42. Therefore, the potential of the connection terminal 42 is expressed by constant current I1 × Rref. The factor Rref is a resistance value of the reference resistance 33.

Meanwhile, when the temperature sensor 3 connected to the input portion 12 is the resistance temperature detector 3A instead of the thermocouple 3B, the input portion 12 is in the circuit state illustrated in FIG. 3. Therefore, the voltage between the connection terminals 41 and 42 is expressed by constant current I1 × Rrtd. The factor Rrtd is a resistance value of the resistance temperature sensing element of the resistance temperature detector 3A.

For example, in a case of constant current I1 = 250 µA, resistance value Rrtd of resistance temperature sensing element = 10 Ω to 400 Ω, resistance value Rref of reference resistance 33 = 2.4 kΩ, and voltage value AVDD of constant current source 34a = 4 V, when the temperature sensor 3 connected to the input portion 12 is the thermocouple 3B (when in a state illustrated in FIG. 7), the voltage between the connection terminals 41 and 42 is expressed by (AVDD) - (I1 × Rref) = 4 V - 250 µA × 2.4 kΩ = 4 V - 0.6 V = 3.4 V.

Meanwhile, when in an inappropriate state in which the temperature sensor 3 connected to the input portion 12 is the resistance temperature detector 3A (when in a state illustrated in FIG. 3), the voltage between the connection terminals 41 and 42 varies depending on the resistance value Rrtd of the resistance temperature sensing element. However, the voltage becomes the minimum value (I1 × Rrtd = 250 µA × 10 Ω = 2.5 mV) when Rrtd = 10 Ω and becomes the maximum value (I1 × Rrtd = 250 µA × 400 Ω = 100 mV) when Rrtd = 400 Ω.

The erroneous connection detecting function portion 22 determines whether or not the voltage between the connection terminals 41 and 42 sensed in s14 is equal to or smaller than a threshold voltage set in advance (s15). As described above, when the thermocouple 3B is connected to the input portion 12 (when not in an inappropriate state), the voltage between the connection terminals 41 and 42 is 3.4 V. In addition, when the resistance temperature detector 3A is connected to the input portion 12 (when in an inappropriate state), the voltage between the connection terminals 41 and 42 is 100 mV at the maximum.

The threshold voltage employed for determination in s15 may be set with a value which is smaller than the voltage between the connection terminals 41 and 42 when the thermocouple 3B is connected to the input portion 12 and is greater than the maximum voltage between the connection terminals 41 and 42 when the resistance temperature detector 3A is connected to the input portion 12. Particularly, since the voltage between the connection terminals 41 and 42 when the thermocouple 3B is connected to the input portion 12 is extremely significant compared to the maximum voltage between the connection terminals 41 and 42 when the resistance temperature detector 3A is connected to the input portion 12, the threshold voltage may be set with a voltage substantially in the middle of the voltage between the connection terminals 41 and 42 when the thermocouple 3B is connected to the input portion 12, and the maximum voltage between the connection terminals 41 and 42 when the resistance temperature detector 3A is connected to the input portion 12. For example, when the threshold voltage is set to approximately 2 V, the erroneous connection detecting function portion 22 can precisely determine whether the temperature sensor 3 connected to the input portion 12 is the resistance temperature detector 3A or the thermocouple 3B.

When it is determined, in s15, that the voltage is not equal to or smaller than the threshold voltage, the erroneous connection detecting function portion 22 ends this processing. In this case, the erroneous connection detecting function portion 22 determines that the state is not an inappropriate state. Meanwhile, when it is determined, in s15, that the voltage is equal to or smaller than the threshold voltage, the erroneous connection detecting function portion 22 outputs an erroneous connection notification notifying a user of an inappropriate state in which the type of the connected temperature sensor 3 and the type of the temperature sensor 3 set by the sensor type setting portion 13 are different from each other (s16). In s16, the display portion 14 may display a message indicating that the temperature sensor 3 is in an inappropriate state, or the message may be output using a warning sound or voice. In addition, the erroneous connection detecting function portion 22 causes the state of the two constant current sources 34a and 34b to be in an OFF-state in which no constant current I1 is output (s17). In addition, the erroneous connection detecting function portion 22 determines that the state is an inappropriate state (s18), and then ends this processing.

The order of the processing of s16, s17, and s18 is not limited to the order described above. The processing may be performed in any order.

Returning to FIG. 5, when it has been determined, through the erroneous connection detecting processing in s1, that the state is an inappropriate state (s2), the temperature regulator 1 proceeds to s6 and waits until the main power source is turned off. In this case, the temperature regulator 1 does not perform control of maintaining the temperature of the controlled object 2 at the target temperature.

When it has not been determined, through the erroneous connection detecting processing in s1, that the state is an inappropriate state, the temperature regulator 1 starts temperature control for the controlled object 2 (s3).

In the temperature control which starts in s3, when the type of the temperature sensor 3 set by the sensor type setting portion 13 is the resistance temperature detector 3A, the temperature regulator 1 causes the state of the two constant current sources 34a and 34b to be in an ON-state outputting the constant current I1. In addition, the temperature regulator 1 causes the change-over switch 32 to be in a state in which the connection terminal 43 is connected to the Vref terminal of the AD converter 31. Then, the temperature sensing processing function portion 21 performs computation processing for a voltage value between the connection terminals 41 and 42 input from the AD converter 31 and then acquires the temperature of the controlled object 2.

In addition, when the type of the temperature sensor 3 set by the sensor type setting portion 13 is the thermocouple 3B, the temperature regulator 1 causes the state of the two constant current sources 34a and 34b to be in an OFF-state in which no constant current I1 is output. In addition, the temperature regulator 1 causes the change-over switch 32 to be in a state in which the connection terminal 43 is connected to the terminal of the analog input terminal AIN2(+) of the AD converter 31. Then, the temperature sensing processing function portion 21 performs computation processing for a voltage value between the connection terminals 42 and 43 input from the AD converter 31 and then acquires the temperature of the controlled object 2.

The computation processing for the voltage value between the connection terminals 41 and 42 performed by the temperature sensing processing function portion 21 in order to acquire the temperature of the controlled object 2, and the computation processing for the voltage value between the connection terminals 42 and 43 are different from each other. Specifically, the temperature sensing processing function portion 21 determines the computation processing for the voltage value between the connection terminals 41 and 42 in accordance with the type of the connected resistance temperature detector 3A. In addition, the temperature sensing processing function portion 21 determines the computation processing for the voltage value between the connection terminals 42 and 43 in accordance with the type of the connected thermocouple 3B.

In addition, the drive signal generation function portion 23 generates a drive signal for the heater 4 based on the temperature of the controlled object 2 acquired by the temperature sensing processing function portion 21, and the set target temperature of the controlled object 2. The drive signal generation function portion 23 generates a drive signal for the heater 4 by performing known PID control or the like. The output portion 15 outputs the drive signal, which has been generated by the drive signal generation function portion 23 for the heater 4, to the heater 4.

In the temperature control which starts in s3, the temperature regulator 1 receives an operation related to a setting change or the like for the target temperature of the controlled object 2.

Incidentally, the erroneous connection detecting processing in s1 described above merely detects whether the temperature sensor 3 connected to the input portion 12 is the resistance temperature detector 3A or the thermocouple 3B, when the type of the temperature sensor 3 set by the sensor type setting portion 13 is the thermocouple 3B. That is, the erroneous connection detecting processing in s1 described above does not detect whether the temperature sensor 3 connected to the input portion 12 is the resistance temperature detector 3A or the thermocouple 3B, when the type of the temperature sensor 3 set by the sensor type setting portion 13 is the resistance temperature detector 3A.

The temperature regulator 1 determines whether or not the type of the temperature sensor 3 set by the sensor type setting portion 13 is the resistance temperature detector 3A when the temperature control starts in s3 (s4). When the type of the temperature sensor 3 set by the sensor type setting portion 13 is not the resistance temperature detector 3A, the temperature regulator 1 proceeds to s6 and waits until the main power source is turned off. In this case, the temperature regulator 1 continues to perform the temperature control which has started in s3, until the main power source is turned off.

When the type of the temperature sensor 3 set by the sensor type setting portion 13 is the resistance temperature detector 3A, the temperature regulator 1 determines whether or not the state is an inappropriate state in which the temperature sensor 3 connected to the input portion 12 by the erroneous connection detecting function portion 22 is not the resistance temperature detector 3A (S5). In S5, for example, the temperature regulator 1 determines whether or not the temperature sensor 3 connected to the input portion 12 is the resistance temperature detector 3A based on the size of a fluctuation range of the voltage value between the connection terminals 41 and 42 input from the AD converter 31. When the temperature sensor 3 connected to the input portion 12 is the thermocouple 3B, the connection terminals 41 and 42 are in an open state. Therefore, when the temperature sensor 3 connected to the input portion 12 is the thermocouple 3B, the voltage value between the connection terminals 41 and 42 seldom changes (no more than a fluctuation caused due to noise). The erroneous connection detecting function portion 22 determines that the state is an inappropriate state when the fluctuation range of the voltage value between the connection terminals 41 and 42 is smaller than the determined range (it is determined that the temperature sensor 3 connected to the input portion 12 is the thermocouple 3B). Meanwhile, the erroneous connection detecting function portion 22 determines that the state is not an inappropriate state when the fluctuation range of the voltage value between the connection terminals 41 and 42 is greater than the determined range (it is detected that the temperature sensor 3 connected to the input portion 12 is the resistance temperature detector 3A).

When the erroneous connection detecting function portion 22 determines, in s5, that the state is not an inappropriate state, the temperature regulator 1 proceeds to s6 and waits until the main power source is turned off. In this case, the temperature regulator 1 continues to perform the temperature control which has started in s3, until the main power source is turned off.

Meanwhile, when the erroneous connection detecting function portion 22 determines, in s5, that the state is an inappropriate state, the temperature regulator 1 stops the temperature control which has started in s3 (s7). In s7, the temperature sensing processing for the controlled object 2 performed by the temperature sensing processing function portion 21 and generation of a drive signal for the heater 4 performed by the drive signal generation function portion 23 are stopped, the output portion 15 is prohibited from outputting a drive signal for the heater 4. In addition, the erroneous connection detecting function portion 22 outputs the erroneous connection notification notifying a user of an inappropriate state in which the type of the connected temperature sensor 3 and the type of the temperature sensor 3 set by the sensor type setting portion 13 are different from each other (s8). Then, the temperature regulator 1 proceeds to s6 and waits until the main power source is turned off. The processing in s8 is processing similar to that in s16 described above.

The order of the processing of s7 and s8 is not limited to the order described above and may be reversely performed.

When the main power source is turned off, the temperature regulator 1 ends this processing. When a user is notified that the state is an inappropriate state, the user turns off the main power source of the temperature regulator 1, and performs changing of the temperature sensor 3 connected to the input portion 12 or changing the setting of the type of the temperature sensor 3 in the sensor type setting portion 13.

In this manner, according to the present example, the temperature regulator 1 can detect whether or not the type of the temperature sensor 3 set by the sensor type setting portion 13 and the type of the temperature sensor 3 connected to the input portion 12 coincide with each other.

In addition, when it is detected that the type of the temperature sensor 3 set by the sensor type setting portion 13 and the type of the temperature sensor 3 connected to the input portion 12 do not coincide with each other, the temperature regulator 1 does not perform the temperature control of the controlled object 2. Therefore, it is possible to restrain the temperature regulator 1 from performing inappropriate temperature control with respect to the controlled object 2 due to erroneous setting of the type of temperature sensor or erroneous connection. Thus, the temperature of the controlled object 2 can be prevented from being far from the target temperature.

In addition, the erroneous connection detecting processing in s1 or the erroneous connection detecting processing in s4 and s5 may be repetitively executed at suitable timing without being limited to when the main power source is turned on and is activated. Consequently, even when the temperature sensor 3 connected to the input portion 12 is damaged, it is possible to restrain the temperature regulator 1 from performing inappropriate temperature control with respect to the controlled object 2.

In addition, in the temperature regulator 1, a current output sensor or a voltage output sensor can be connected to the input portion 12. The current output sensor may be connected to the connection terminals 41 and 42. The voltage output sensor may be connected to the connection terminals 42 and 43.

In addition, when the input portion 12 is configured not to have the change-over switch 32 and the reference resistance 33 described in the example above as illustrated in FIG. 8, the temperature regulator 1 may employ a configuration of detecting whether the temperature sensor 3 connected to the input portion 12 is the resistance temperature detector 3A or the thermocouple 3B based on the voltage value between the connection terminals 41 and 42. Specifically, the state of the two constant current sources 34a and 34b is caused to be in an ON-state outputting the constant current I1 and the voltage value between the connection terminals 41 and 42 is sensed. When the sensed voltage value between the connection terminals 41 and 42 is equal to or greater than the threshold, it may be determined that the temperature sensor 3 connected to the input portion 12 is the resistance temperature detector 3A. In this case, the threshold voltage may be determined based on the resistance value Rrtd of the resistance temperature sensing element, and the constant current I1. Specifically, the threshold voltage may be set to a value smaller than the minimum resistance value Rrtd (min) × I1 of the resistance temperature sensing element.

### [Explanation of Labels]

1 temperature regulator; 2 controlled object; 3 temperature sensor; 3A resistance temperature detector; 3B thermocouple; 4 heater; 11 controller; 12 input portion; 13 sensor type setting portion; 14 display portion; 15 output portion; 21 temperature sensing processing function portion; 22 erroneous connection detecting function portion; 23 drive signal generation function portion; 31 AD converter; 32 change-over switch; 33 reference resistance; 34a, 34b constant current source; 41, 42, 43 connection terminals; S1 to S8, S11 to S18 steps.

## Claims

1. A temperature sensing unit comprising:
an input portion (12) to which at least a resistance temperature detector (3A) and a thermocouple (3B) can be selectively connected as a temperature sensor (3) for sensing a temperature of a controlled object (2);
a processing portion (21, 22), performing a temperature sensing processing of processing a sensing signal of the temperature sensor (3) connected to the input portion (12) and acquiring the temperature of the controlled object; and
a temperature sensor type setting portion (13), setting a type of a temperature sensor (3) to be connected to the input portion (12), and
wherein the input portion (12) comprises a first connection terminal (41) to which one end of a temperature sensing resistance countermeasure element of the resistance temperature detector (3A) is connected, a second connection terminal (42) to which the other end of the temperature sensing resistance countermeasure element of the resistance temperature detector (3A) or one end of the thermocouple (3B) is selectively connected, and a third connection terminal (43) to which the other end of the thermocouple (3B) is connected, the temperature sensing unit being **characterized in that**
when the type of the temperature sensor (3) set by the temperature sensor type setting portion (13) is a thermocouple (3B), the processing portion (21, 22) performs an erroneous connection detecting processing of detecting whether or not the temperature sensor (3) connected to the input portion (12) is a thermocouple (3B) by determining that the connection is erroneous if an inter-terminal voltage between the first connection terminal (41) and the second connection terminal (42) is equal to or smaller than a threshold voltage set in advance in a state in which a constant current flows through the first connection terminal (41) and the second connection terminal (42),
wherein the threshold voltage is a value which is smaller than a voltage between the first connection terminal (41) and the second connection terminal (42) when the thermocouple (3B) is connected to the input portion (12) and is greater than a maximum voltage between the first connection terminal (41) and the second connection terminal (42) when the resistance temperature detector (3A) is connected to the input portion (12).

2. The temperature sensing unit according to claim 1,
wherein the processing portion (21, 22) further performs the erroneous connection detecting processing by applying a reference voltage to the third connection terminal (43).

3. The temperature sensing unit according to any one of claims 1 to 2,
wherein the processing portion (21, 22) performs the erroneous connection detecting processing when activated.

4. The temperature sensing unit according to any one of claims 1 to 3, further comprising:
a display portion (14), displaying a result of detection when the processing portion (21, 22) detects, in the erroneous connection detecting processing, that the temperature sensor (3) connected to the input portion (12) is not a thermocouple (3B).

5. The temperature sensing unit according to any one of claims 1 to 4,
wherein for the resistance temperature detector (3A) of a three-wire type, the one end of the temperature sensing resistance countermeasure element is connected to the first connection terminal (41), and the other end of the temperature sensing resistance countermeasure element is connected to the second connection terminal (42) and the third connection terminal (43) in the input portion (12).

6. A temperature regulator (1) comprising:
the temperature sensing unit according to any one of claims 1 to 5;
a drive signal generating portion (23), generating a drive signal for a heat source controlling a temperature of the controlled object in accordance with the temperature of the controlled object sensed by the processing portion (21, 22) in the temperature sensing processing; and
an output portion (15), outputting a drive signal generated by the drive signal generating portion to the heat source changing the temperature of the controlled object.

7. The temperature regulator according to claim 6,
wherein the drive signal generating portion prohibits the output portion from outputting the drive signal to the heat source when the processing portion (21, 22) detects, in the erroneous connection detecting processing, that a sensor connected to the input portion (12) is not a thermocouple (3B).

## Patentansprüche

1. Temperaturerfassungseinheit, umfassend:
einen Eingabeabschnitt (12), an dem wenigstens ein Widerstandstemperaturdetektor (3A) und ein Thermoelement (3B) wahlweise als ein Temperatursensor (3) zum Erfassen einer Temperatur eines gesteuerten Objekts (2) verbunden werden können;
einen Verarbeitungsabschnitt (21, 22), der Temperaturerfassungsverarbeiten zum Verarbeiten eines Erfassungssignal des Temperatursensors (3), der mit dem Eingabeabschnitt (12) verbunden ist und zum Erhalten der Temperatur des gesteuerten Objekts durchführt; und
einen Temperatursensortyp-Einstellabschnitt (13), der einen Typ eines Temperatursensors (3) einstellt, um mit dem Eingabeabschnitt (12) verbunden zu sein, und
wobei der Eingabeabschnitt (12) einen ersten Verbindungsanschluss (41), an dem ein Ende eines Temperaturerfassungswiederstand-Gegenmesselements des Widerstandstemperaturdetektors (3A) verbunden ist, einen zweiten Verbindungsanschluss (42), an dem das andere Ende des Temperaturerfassungswiederstand-Gegenmesselements des Widerstandstemperaturdetektors (3A) oder ein Ende des Thermoelements (3B) wahlweise verbunden ist, und einen dritten Verbindungsanschluss (43) umfasst, an dem das andere Ende des Thermoelements (3B) verbunden ist, wobei die Temperaturerfassungseinheit **dadurch gekennzeichnet ist, dass**
wenn der Typ des Temperatursensors (3), der durch den Temperatursensortyp-Einstellabschnitt (13) eingestellt ist, ein Thermoelement (3B) ist, der Verarbeitungsabschnitt (21, 22) fehlerhaftes Verbindungsdetektionsverarbeiten durchführt, um zu detektieren, ob oder nicht der Temperatursensor (3), der mit dem Eingabeabschnitt (12) verbunden ist, ein Thermoelement (3B) ist, durch bestimmen, dass die Verbindung fehlerhaft ist, wenn eine Zwischenanschlussspannung zwischen dem ersten Verbindungsanschluss (41) und dem zweiten Verbindungsanschluss (42) gleich oder kleiner ist als eine vorher eingestellte Schwellenspannung in einem Zustand, in dem ein konstanter Strom durch den ersten Verbindungsanschluss (41) und den zweiten Verbindungsanschluss (42) fließt,
wobei die Schwellenspannung ein Wert ist, der kleiner als eine Spannung zwischen dem ersten Verbindungsanschluss (41) und dem zweiten Verbindungsanschluss (42) ist, wenn das Thermoelement (3B) mit dem Eingabeabschnitt (12) verbunden ist, und größer als eine maximale Spannung zwischen dem ersten Verbindungsanschluss (41) und dem zweiten Verbindungsanschluss (42) ist, wenn der Widerstandstemperaturdetektor (3A) mit dem Eingabeabschnitt (12) verbunden ist.

2. Temperaturerfassungseinheit gemäß Anspruch 1,
wobei der Verarbeitungsabschnitt (21, 22) ferner das fehlerhafte Verbindungsdetektionsverarbeiten, durch Anlegen einer Referenzspannung an den dritten Verbindungsanschluss (43), durchführt.

3. Temperaturerfassungseinheit gemäß irgendeinem der Ansprüche 1 bis 2,
wobei der Verarbeitungsabschnitt (21, 22) das fehlerhafte Verbindungsdetektionsverarbeiten durchführt, wenn aktiviert.

4. Temperaturerfassungseinheit gemäß irgendeinem der Ansprüche 1 bis 3, ferner umfassend:
einen Anzeigeabschnitt (14), der ein Ergebnis der Detektion anzeigt, wenn der Verarbeitungsabschnitt (21, 22) bei dem fehlerhaften Verbindungsdetektionsverarbeiten detektiert, dass der Temperatursensor (3), der mit dem Eingabeabschnitt (12) verbunden ist, kein Thermoelement (3B) ist.

5. Temperaturerfassungseinheit gemäß irgendeinem der Ansprüche 1 bis 4,
wobei für den Widerstandstemperaturdetektor (3A) vom Dreileitertyp, das eine Ende des Temperaturerfassungswiederstand-Gegenmesselements mit dem ersten Verbindungsanschluss (41) verbunden ist und das andere Ende des Temperaturerfassungswiederstand-Gegenmesselements mit dem zweiten Verbindungsanschluss (42) und dem dritten Verbindungsanschluss (43) in dem Eingabeabschnitt (12) verbunden ist.

6. Temperaturregler (1), umfassend:
die Temperaturerfassungseinheit gemäß irgendeinem der Ansprüche 1 bis 5;
einen Ansteuersignalerzeugungsabschnitt (23), der ein Ansteuersignal für eine Wärmequelle erzeugt, die eine Temperatur des gesteuerten Objekts in Übereinstimmung mit der Temperatur des gesteuerten Objekts steuert, das von dem Verarbeitungsabschnitt (21, 22) in der Temperaturerfassungsverarbeitung erfasst wird; und
einen Ausgabeabschnitt (15), der ein Ansteuersignal ausgibt, das durch den Ansteuersignalerzeugungsabschnitt erzeugt wird, an die Wärmequelle, die die Temperatur des gesteuerten Objekts ändert.

7. Temperaturregler gemäß Anspruch 6,
wobei der Ansteuersignalerzeugungsabschnitt verhindert, dass der Ausgabeabschnitt das Ansteuersignal an die Wärmequelle ausgibt, wenn der Verarbeitungsabschnitt (21, 22) bei dem fehlerhaften Verbindungsdetektionsverarbeiten detektiert, dass ein Sensor, der mit dem Eingabeabschnitt (12) verbunden ist, kein Thermoelement (3B) ist.

## Revendications

1. Unité de détection de température, comprenant :
une section d'entrée (12) dans laquelle un détecteur de température de résistance (3A) et un thermocouple (3B) peuvent être sélectivement connectés en tant que capteur de température (3) pour détecter une température d'un objet commandé (2) ;
une section de traitement (21,22), réalisant un traitement de détection de température de traitement d'un signal de détection du capteur de température (3), connectée à la section d'entrée (12) et acquérant la température de l'objet commandé ; et
une section de définition de type de capteur de température (13), définissant un type de capteur de température (3) à connecter à la section d'entrée (12), et
la section d'entrée (12) comprenant une première borne de connexion (41) à laquelle une extrémité d'un élément de contre-mesure de résistance de détection de température du détecteur de température de résistance (3A) est connectée, une deuxième borne de connexion (42) à laquelle l'autre extrémité de l'élément de contre-mesure de résistance de détection de température du détecteur de température de résistance (3A) est connectée ou une extrémité du thermocouple (3B) est sélectivement connectée, et une troisième borne de connexion (43) à laquelle l'autre extrémité du thermocouple (3B) est connectée, l'unité de détection de température étant **caractérisée en ce que**, lorsque le type de capteur de température (3) défini par la section de définition de type de capteur de température (13) est un thermocouple (3B), la section de traitement (21,22) réalise un traitement de détection de connexion erronée pour détecter si oui ou non le capteur de température (3) connecté à la section d'entrée (12) est un thermocouple (3B) en déterminant que la connexion est erronée si une tension inter-bornes entre la première borne de connexion (41) et la deuxième borne de connexion (42) est inférieure ou égale à une tension seuil définie d'avance dans un état dans lequel un courant constant s'écoule à travers la première borne de connexion (41) et la deuxième borne de connexion (42),
la tension seuil est une valeur qui est inférieure à une tension entre la première borne de connexion (41) et la deuxième borne de connexion (42) lorsque le thermocouple (3B) est connecté à la section d'entrée (12) et est supérieure à une tension maximale entre la première borne de connexion (41) et la deuxième borne de connexion (42) lorsque le détecteur de température de résistance (3A) est connecté à la section d'entrée (12))

2. Unité de détection de température selon la revendication 1,
dans laquelle la section de traitement (21,22) réalise en outre le traitement de détection de connexion erronée en appliquant une tension de référence à la troisième borne de connexion (43).

3. Unité de détection de température selon l'une quelconque des revendications 1 à 2,
dans laquelle la section de traitement (21,22) réalise le traitement de détection de connexion erronée lorsqu'elle est activée.

4. Unité de détection de température selon l'une quelconque des revendications 1 à 3, comprenant en outre :
une section d'affichage (14), affichant un résultat de détection lorsque la section de traitement (21,22) détecte, dans le traitement de détection de connexion erronée, que le capteur de température (3) connecté à la section d'entrée (12) n'est pas un thermocouple (3B) .

5. Unité de détection de température selon l'une quelconque des revendications 1 à 4,
dans laquelle, pour le détecteur de température de résistance (3A) de type à trois fils, une extrémité de l'élément de contre-mesure de résistance de détection de température est connectée à la première borne de connexion (41), et l'autre extrémité de l'élément de contre-mesure de résistance de détection de température est connectée à la deuxième borne de connexion de température (42) et à la troisième borne de connexion (43) dans la section d'entrée (12).

6. Régulateur de température (1) comprenant :
l'unité de détection de température selon l'une quelconque des revendications 1 à 5 ;
une section de génération de signal d'entraînement (23), générant un signal d'entraînement pour une source de chaleur commandant une température de l'objet commandé en fonction de la température de l'objet commandé détectée par la section de traitement (21,22) dans le traitement de détection de température ; et
une section de sortie (15), émettant un signal d'entraînement généré par la section de génération de signal d'entraînement vers la source de chaleur modifiant la température de l'objet commandé.

7. Régulateur de température selon la revendication 6, dans lequel la section de génération de signal d'entraînement interdit à la section de sortie d'émettre le signal d'entraînement vers la source de chaleur lorsque la section de traitement (21,22) détecte, dans le traitement de détection de connexion erronée, qu'un capteur connecté à la section d'entrée (12) n'est pas un thermocouple (3B).
